# EUROPEAN PATENT SPECIFICATION

(11) **EP 4 361 625 B1**
(45) Date of publication and mention of the grant of the patent: **25.11.2026**
(21) Application number: 23202590.8
(22) Date of filing: 10.10.2023
(51) Int. Cl.: G01N 29/04, G01N 29/07, G01N 29/11

(54) **SYSTEM AND METHOD FOR MONITORING DEFECTS WITHIN AN INTEGRATED SYSTEM PACKAGE**
SYSTEM UND VERFAHREN ZUR ÜBERWACHUNG VON DEFEKTEN IN EINEM INTEGRIERTEN SYSTEMPAKET
SYSTÈME ET PROCÉDÉ DE SURVEILLANCE DE DÉFAUTS DANS UN BOÎTIER DE SYSTÈME INTÉGRÉ

(30) Priority: 24.10.2022 IT 202200021900
(43) Date of publication of application: 01.05.2024
(73) Proprietor: STMicroelectronics S.r.l., 20864 Agrate Brianza (MB) (IT)
(72) Inventor: GIUSTI, Domenico, 20867 Caponago (MB) (IT); DEL SARTO, Marco, 20900 Monza (MB) (IT); QUAGLIA, Fabio, 27050 Pizzale (PV) (IT); DUQI, Enri, 20126 Milano (IT)
(74) Representative: Studio Torta S.p.A.

(56) References cited:
- EP-A1- 3 530 358
- EP-B1- 3 344 401

## Description

The present solution relates to a system for monitoring defects within integrated system packages.

In the miniaturized electronic field, a known trend is that of providing complex integrated systems within single packages (so-called SiP - System in Package).

Such systems generally comprise a certain number of dies of semiconductor material, integrating respective sensors (in particular MEMS - Micro-Electro-Mechanical System - sensors) or respective integrated electronic circuits (so-called ASIC - Application Specific Integrated Circuit), such dies being accommodated within a single package, in particular within a corresponding coating material (usually epoxy resin).

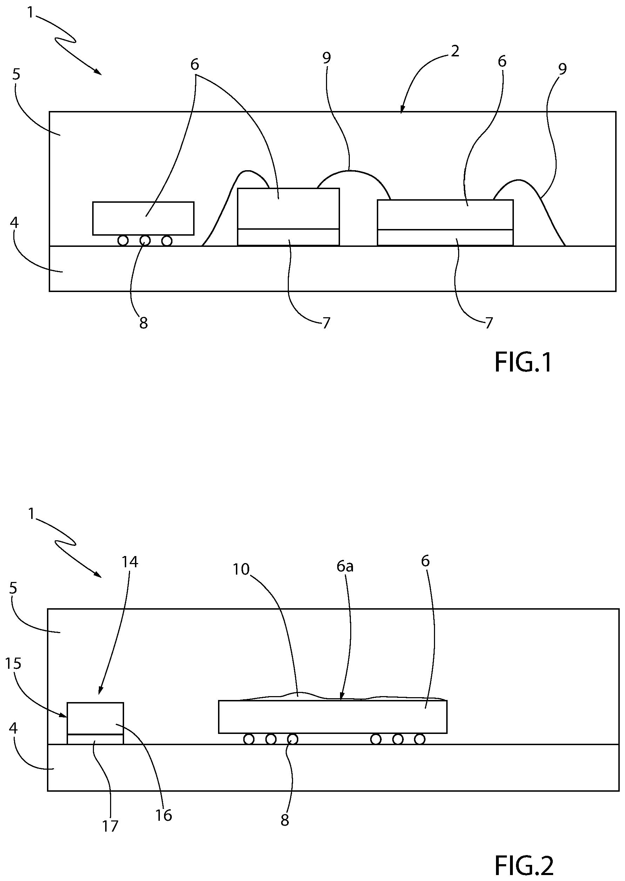

By way of example, Figure 1 schematically shows an integrated system 1 formed in a single package 2, comprising a support substrate or base 4, for example a so-called leadframe or an organic substrate, and a coating region 5, for example of epoxy resin, formed above the support base 4.

A certain number of dies 6 (hereinafter referred to as "system dies", three of which are depicted by way of example) are coupled to the support base 4, for example by a respective adhesive material region 7 (so-called "die attach") or by interposing connection elements 8, for example in the form of conductive pads or balls. The system dies 6 are for example arranged side by side and are housed within the coating region 5, which coats them entirely.

Electric wires 9 connect respective system dies 6 to each other (with the so-called "wire bonding" technique) and also the same system dies 6 with contact pads and/or electrical connection tracks (not illustrated) formed on the surface of the support base 4.

As it is known, in these integrated systems 1, in particular within the corresponding packages 2, damages or breakdowns (so-called "failure" phenomena) may occur, which may entail the decay of the electrical performances or, in the worst case, a malfunction of the same integrated systems 1.

For example, breakdowns or formation of cracks may occur in the coating region 5; another common degradation phenomenon is represented by the so-called delaminations, which may occur in an "embedded" manner within the package 2 and are represented by total or partial detachments between a corresponding top and/or bottom surface of the system dies 6 and the coating region 5 (in general, such delaminations may occur at the interfaces between the same system dies 6 and the coating region 5).

To date, there are no effective tools to detect the presence of the aforementioned defects within the package 2 of the integrated systems 1, if not observing, a-posteriori, the effects on the operativeness of the same integrated systems 1 (i.e., the associated degradation of performances or, in the worst case, failure to operate).

Failure analysis techniques have also been proposed to estimate the residual life of the integrated systems 1 through statistical analysis; however, it is clear that these techniques are not entirely satisfactory, as they are unable, due to their probabilistic nature, to provide accurate information on the modes and actual times associated with the occurrence of damages or malfunctions.

EP 3 530 358 A1 discloses a device for emitting an ultrasound acoustic wave in a propagation medium, comprising: a package including a base substrate and a cap coupled to the base substrate and defining therewith a chamber in the package; a semiconductor die, coupled to the base substrate in the chamber, comprising a semiconductor body; a micromachined ultrasonic transducer (MUT) integrated at least in part in the semiconductor body and including a cavity in the semiconductor body and a membrane suspended over the cavity; and an actuator, operatively coupled to the membrane, which can be operated for generating a deflection of the membrane. The membrane is designed in such a way that a resonance frequency thereof matches an acoustic resonance frequency that, during operation of the MUT, develops in the chamber of the package.

The aim of the present solution is to provide a solution allowing to implement an effective real-time monitoring of any degradation of the packaging or coating material within the package of an integrated system, in such a way as to increase the reliability of the same integrated system.

According to the present solution, a system and a method are provided, as defined in the attached claims.

For a better understanding of the present invention, preferred embodiments thereof are now described, purely by way of non-limiting example, with reference to the attached drawings, wherein:
- Figure 1 is a schematic section of a known integrated system;
- Figure 2 is a schematic section of an integrated system provided with a monitoring system, according to an embodiment of the present solution;
- Figure 3 shows a circuit diagram of an electronic circuit associated with a transducer device of the monitoring system, in a possible implementation thereof;
- Figure 4 is a schematic section of an integrated system provided with a monitoring system, according to a further embodiment of the present solution;
- Figure 5 shows plots of monitoring quantities in the monitoring system;
- Figure 6 is a schematic cross-section of a transducer device of the monitoring system, in a possible implementation;
- Figures 7A and 7B are, respectively, a top view and a schematic cross-sectional view of a matrix of PMUT elements of the transducer device;
- Figure 8 is a schematic cross-section of an integrated system provided with a monitoring system, according to yet another embodiment of the present solution; and
- Figures 9A-9C are schematic top views of possible implementations of the integrated system provided with the monitoring system, according to the present solution.

As will be described in detail, one aspect of the present solution envisages integrating, within the package of an integrated system, a monitoring system, configured to determine in real time the onset of defects within the corresponding coating material, through the emission of acoustic detection waves, in particular ultrasound waves, and the acquisition and processing of corresponding received acoustic waves, whose characteristics are affected by, and therefore indicative of, the aforementioned defects.

As illustrated schematically in Figure 2 (wherein elements similar to others already discussed in Figure 1 are denoted with the same reference numerals and are not described again in detail), an integrated system 1 according to an aspect of the present solution thus comprises, within the corresponding package 2, a monitoring system 14 provided with at least one transducer device 15 configured for the emission (and/or reception) of acoustic detection waves, in particular ultrasound waves.

In detail, this transducer device 15 is a micromechanical ultrasound transducer, so-called MUT, Micromachined Ultrasound Transducer, made using micromachining technologies of semiconductor materials in a respective die 16 (hereinafter referred to as a monitoring die), coupled to the support base 4 within the coating region 5, for example by a respective die attach region 17.

In one embodiment, this transducer device 15 is a piezoelectric-type transducer, PMUT (Piezoelectric Micromachined Ultrasound Transducer).

The transducer device 15 is biased (for example by an ASIC driving circuit, which may be integrated in the same monitoring die 16) so as to emit ultrasound waves which propagate within the coating region 5, in a manner confined thereto, up to reaching the interface between the system die 6 and the coating region 5.

The same transducer device 15 may be configured to receive and process the echo of the ultrasound waves, whose characteristics are affected by the presence of defects within the package 2, for example delaminations at the interface between the system die 6 and the coating region 5, in order to detect the presence of the same defects.

By way of example, the above Figure 1 shows a delamination 10 at the aforementioned interface, in particular with the formation of an empty region between the top surface of the die (here indicated by 6a), or part thereof, and the overlying coating region 5. This empty region may be non-uniform above the top surface 6a of the system die 6, for example in terms of a corresponding thickness in the vertical direction (along a vertical axis orthogonal to the same top surface 6a).

In particular, these defects may determine a change in the acoustic impedance of the corresponding coating region 5 and therefore a different reflection (or transmission) pattern of the acoustic detection waves.

According to an aspect of the present solution, the aforementioned processing of the acoustic detection waves may be performed by an ASIC reading circuit integrated in the monitoring die 16 of the same transducer device 15.

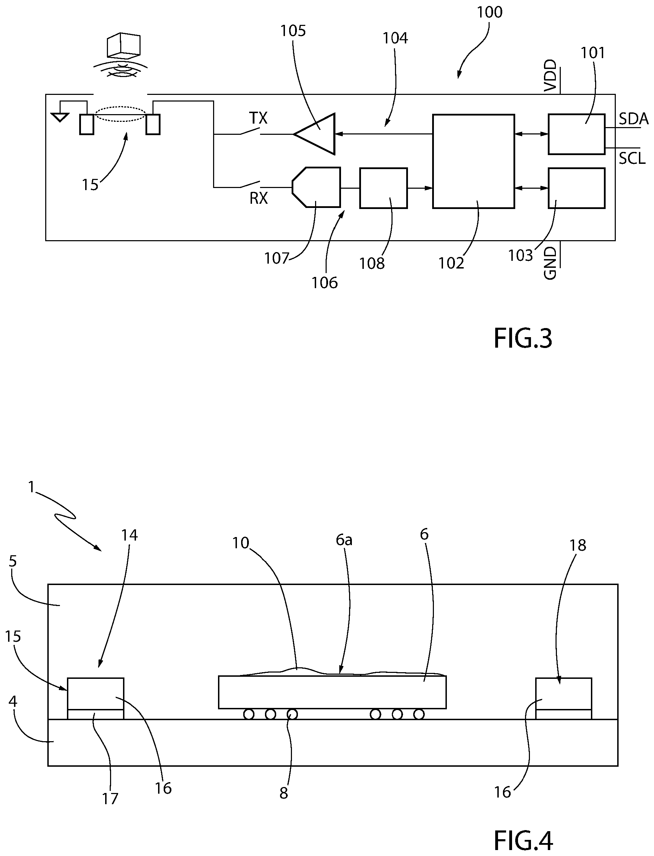

In this regard, and purely by way of example, Figure 3 shows a possible implementation of an ASIC circuit, indicated by 100, associated with the transducer device 15 (here shown schematically) and configurable to operate alternatively as the aforementioned driving and reading circuits for the acoustic detection waves.

The ASIC circuit 100 comprises: an interface 101, configured to receive one or more configuration signals (SDA, SCL), for configuring the same ASIC circuit 100 as a driving or reading circuit; a controller 102 coupled to the interface 101 to receive the configuration signal; a non-volatile memory 103, operatively associated with the controller 102; a driving branch 104, including an amplifier 105, which may be selectively coupled to the transducer device 15 for driving the same transducer device 15; and a reading branch 106, including an ADC (Analog to Digital) converter 107 and with a DSP (Digital Signal Processor) 108, which may be selectively coupled to the transducer device 15, for reading the acoustic detection waves and providing associated reading signals to the controller 102.

In a possible embodiment, shown by way of example in Figure 4, the aforementioned monitoring system 14 comprises at least: a first transducer device, denoted again by 15, operating as an emitter of acoustic detection waves, in particular ultrasound waves, so that they impinge on at least one system die 6, of which it is desired to monitor a corresponding interface with the coating region 5; and a second transducer device 18, operating as a receiver of the acoustic detection waves (after the same acoustic detection waves have impinged on and traversed the aforementioned interface to be monitored).

Both the aforementioned first and second transducer devices 15, 18 may be of the PMUT type, in this case being provided in respective monitoring dies 16 of semiconductor material, which may be arranged side by side, on opposite sides of the aforementioned system die 6 along a longitudinal direction (the system die 6 being therefore interposed between the respective monitoring dies 16 of the first and second transducer devices 15, 18).

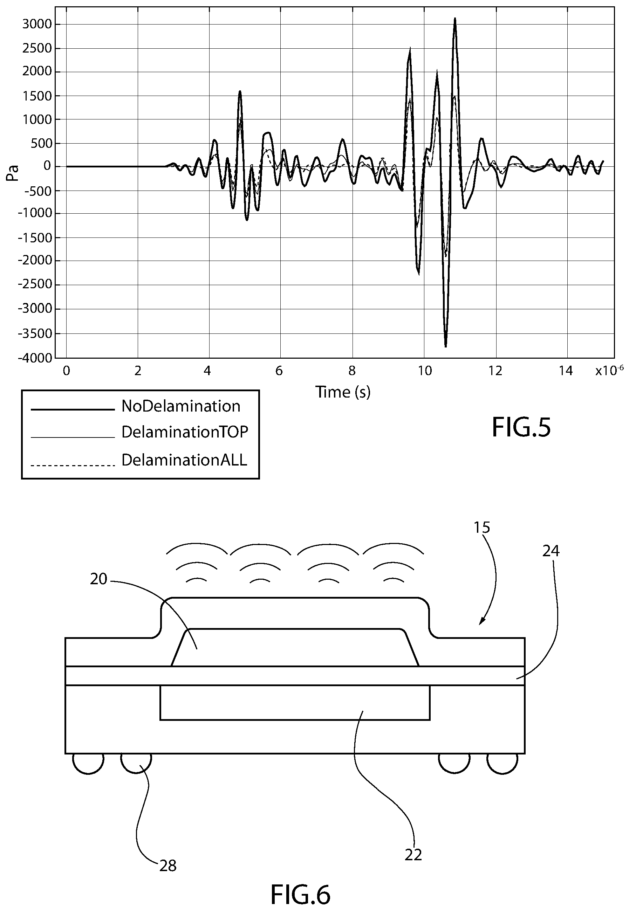

Figure 5 illustrates plots corresponding to the values of acoustic pressure, Pa, associated with the acoustic detection waves, in the absence (NoDelamination) or in the presence of a delamination 10 (which may only affect the top surface, DelaminationTOP, or both of the surfaces, DelaminationALL, of the system die 6).

The characteristics (for example in terms of amplitude and/or of a corresponding time trend, for example as regards the arrival time, so-called "time of flight") of the detected signal (due to the acoustic detection waves reaching the second transducer device 18) are considerably different in the presence of defects at the interface between the system die 6 and the coating region 5 with respect to the case of absence of the same defects.

In particular, the amplitude of the detected signal is considerably lower, in the example illustrated about half, in the event that a defect is present, for example the aforementioned delamination 10 at the interface between the system die 6 and the coating region 5.

As a function of processing of the characteristics of the detected signal (for example through an analysis of amplitude or energy content within a given time window), the onset of defects within the package 2 of integrated system 1 may therefore be detected, in real time.

In greater detail, the aforementioned transducer device 15 may be made as shown schematically in Figure 6, i.e. with a stacked arrangement of a corresponding matrix or array 20 of PMUT transducer elements, for emitting and/or receiving ultrasound waves, and of a corresponding ASIC circuit 22, coupled to the same matrix 20 (having the function of driving and/or processing of the detected signals, depending on the operation as ultrasound emitter and/or receiver). The aforementioned matrix 20 and the aforementioned ASIC circuit 22 may be coupled on opposite sides of a common substrate 24, having respective connection elements 28 at the bottom, in the example in the form of conductive balls, for the electrical coupling to the support base 4 (not illustrated here) of the package 2 of the integrated system 1.

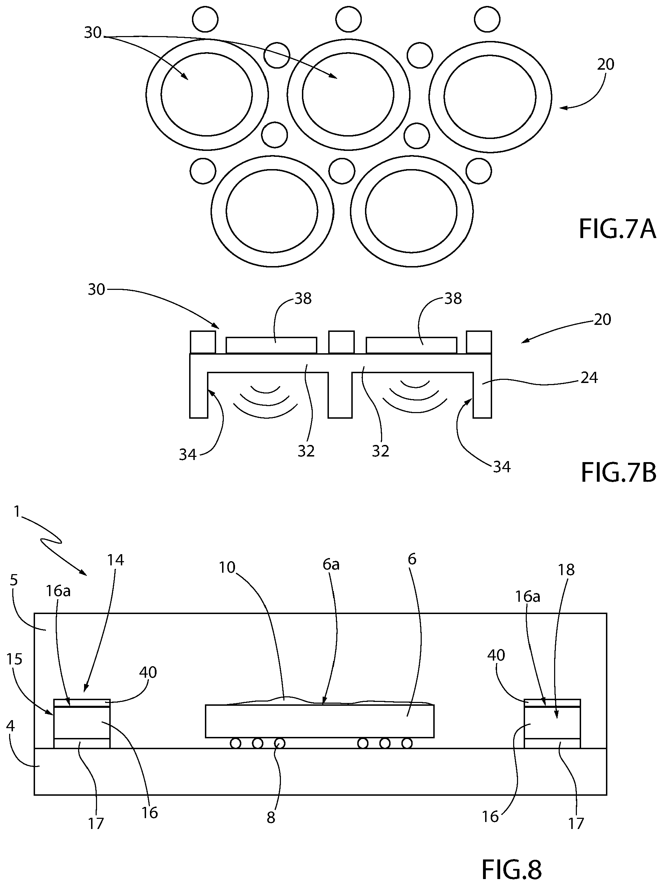

As shown schematically in Figures 7A and 7B, the aforementioned matrix 20 is made of a plurality of PMUT transducer elements 30, each comprising a respective membrane 32 suspended above a cavity 34 buried in a surface portion of the substrate 24 and a respective piezoelectric stack 38, formed (in a manner not illustrated in detail) by a bottom electrode, a piezoelectric material region and a top electrode (the piezoelectric material region being interposed between the bottom electrode and the top electrode).

In a manner not illustrated in detail, suitable electrical connection paths through the substrate 24 connect the aforementioned bottom electrode and top electrode to the respective ASIC circuit 22, which may comprise: a driving module, for supplying suitable biasing signals to the aforementioned bottom electrode and top electrode to cause the deformation of the membrane 32 and generation of acoustic detection waves (particularly in the ultrasound range, for example with a resonance frequency around 5 MHz); and/or a detection module, for reading the electrical signals transduced by the same bottom electrode and top electrode when the membrane 32 is deformed by impinging acoustic waves, for example due to the reception of the aforementioned acoustic detection waves.

A suitable matrix arrangement of the PMUT transducer elements 30 may allow a desired scan of the defects within the package 2, or in any case directing, in a desired manner, the generated acoustic detection waves towards the interfaces to be monitored between the system dies 6 and the coating region 5.

As shown schematically in Figure 8, a further aspect of the present solution envisages the presence of an interface region 40 interposed between the top surface (indicated by 16a) of the monitoring die 16 of the first and second transducer devices 15, 18 (or only of the first transducer device 15, in case it operates as both emitter and receiver) and the coating region 5. In particular, this interface region 40 has, in this case, an acoustic impedance matching function.

With reference to the embodiment previously discussed, for example, this interface region 40 may be arranged between the matrix 20 of the PMUT transducer elements 30 (in particular, between the corresponding piezoelectric stacks 38) and the aforementioned coating region 5.

Depending on the material of the coating region 5, even significant reflections of the generated acoustic detection waves may in fact occur, due to an acoustic impedance mismatching between the transducer material (for example the piezoelectric material of the PMUT transducer elements 30) and the same coating region 5.

For example, the coating region 5, in the case of epoxy resin, may have a characteristic acoustic impedance Z₁ equal to 2.64·10⁶ Kg/m²·s, as compared to the acoustic impedance Z₂ of the piezoelectric material of the transducer equal to 3.25·10⁶ Kg/m²·s.

The thickness of the aforementioned interface region 40 is advantageously sized at 1/4 wavelength and the corresponding characteristic impedance, Z₃, is calculated as: ${Z}_{3} = \sqrt{{Z}_{1} ⋅ {Z}_{2}}$, in the example being equal to 2.93·10⁶ Kg/m²·s.

In this example, the interface region 40 may comprise a hard silicone material, such as a silicone plastic, having a characteristic impedance of 2.73·10⁶ Kg/m²·s, which most closely approaches the aforementioned value of the impedance Z₃.

The advantages of the present solution are clear from the preceding description.

In any case, it is emphasized again that the monitoring system 14 allows detecting, advantageously in real time, the presence of defects, for example delaminations, within the package 2 of an integrated system 1.

The solution described is simple and inexpensive to implement, without entailing a substantial increase in manufacturing costs.

This solution is therefore particularly advantageous for implementing, for example, in an electronic apparatus, for example of the portable or wearable type (for example a smart bracelet or watch).

The electronic apparatus may comprise a main controller (a microcontroller, a microprocessor or a similar digital processing unit), which may be coupled to the monitoring system 14, in order to receive information corresponding to the detection of defects within the package **2.**

This main controller, as a function the detection of the aforementioned defects, may perform suitable actions, for example emitting a warning signal associated with the presence of the same defects.

Finally, it is clear that modifications and variations may be made to what has been described and illustrated without thereby departing from the scope of the present invention, as defined in the attached claims.

In particular, it is underlined that the monitoring system 14 may comprise a plurality of transducer devices (indicated in general by 15) within the package 2, configured and arranged for monitoring the defects within the coating region 5, operating as a transmitter or receiver of acoustic detection waves.

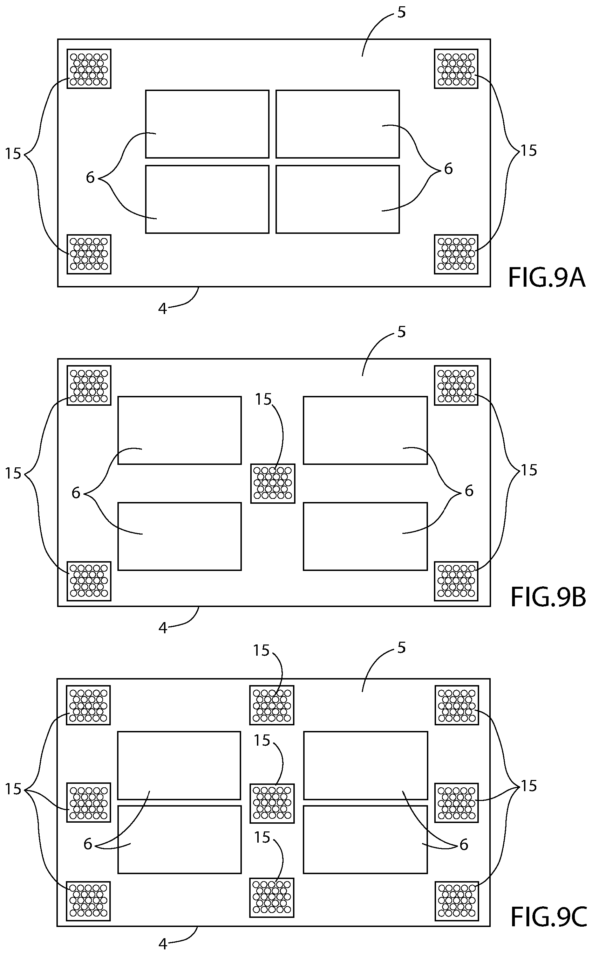

By way of example, Figures 9A-9C show possible variant embodiments, wherein the integrated system 1 comprises, by way of example, four system dies 6 (three dies integrating respective ASIC electronic circuits and one die integrating a MEMS sensor).

In particular, in Figure 9A, the monitoring system 14 comprises four transducer devices 15, arranged in plan view at the vertices of the support base 4 of the package 2 (having a substantially rectangular shape in plan view); in this case, the aforementioned system dies 6 are arranged centrally with respect to the same support base 4, in a position close to each other.

In Figure 9B, the monitoring system 14 comprises (in addition to the aforementioned four transducer devices 15) a further transducer device 15, arranged at the centre of the aforementioned support base 4, surrounded by the system dies 6.

In Figure 9C, the monitoring system 14 comprises nine transducer devices 15, arranged in rows of three, respectively at the external sides and at the centre of the support base 4; in this case, the system dies 6 are arranged between respective rows of transducer devices 15.

However, it is clear that further and different arrangements of the transducer devices 15 may be provided and implemented, in order to obtain a desired redundancy of the monitoring information for detecting defects within the package 2 of the integrated system 1.

Furthermore, it is highlighted that, in an alternative embodiment, the transducer device(s) 15 may comprise a respective Capacitive Micromachined Ultrasonic Transducer, CMUT.

The driving and/or detection circuit associated with the transducer device 15 may alternatively be provided externally to the monitoring die 16 of the same transducer device 15, for example within the aforementioned main controller of the electronic apparatus wherein the integrated system 1 is used.

## Claims

1. An integrated electronic system (1) provided with a package (2) formed by a support base (4) and by a coating region (5) arranged on the support base (4) and comprising at least a first system die (6), including semiconductor material, coupled to the support base (4) and arranged in the coating region (5),
further comprising, within the package (2), a monitoring system (14) configured to determine the onset of defects within the coating region (5), through the emission of acoustic detection waves and the acquisition of corresponding received acoustic waves, whose characteristics are affected by, and therefore are indicative of, the aforementioned defects,
wherein said monitoring system (14) comprises at least one transducer device (15) formed in a first monitoring die (16), coupled to the support base (4) within the coating region (5) in which the first system die (6) is also arranged, said transducer device (15) being a micromachined ultrasound transducer, MUT.

2. The system according to claim 1, wherein said monitoring system is configured to determine the onset of a delamination with partial or total detachment, from said coating region (5), of a top surface (6a) and/or of a bottom surface of said first system die (6), the bottom surface being coupled to the support base (4).

3. The system according to claim 1 or 2, wherein said transducer device (15) is configured to emit and/or receive said acoustic waves.

4. The system according to any of the preceding claims, wherein said transducer device (15) is a piezoelectric transducer, PMUT - Piezoelectric Micromachined Ultrasound Transducer.

5. The system according to any of claims 1-3, wherein said transducer device (15) is a capacitive transducer, CMUT - Capacitive Micromachined Ultrasound Transducer.

6. The system according to any of preceding claims, wherein said transducer device (15) is configured to emit ultrasound waves which propagate within the coating region (5), in a manner confined thereto, so as to reach said system die (6); and said monitoring system (14) is configured to process signals detected as a function of received ultrasound waves, whose characteristics are affected by the presence of said defects, so as to detect the presence of said defects in real time.

7. The system according to claim 6, wherein, in the presence of said defects, characteristics in terms of amplitude and/or of a corresponding time trend of the detected signals are different with respect to the case of absence of defects.

8. The system according to any of preceding claims, comprising at least one further transducer device (18) designed to operate as a receiver of acoustic detection waves, formed in a second monitoring die (16), coupled to the support base (4) within the coating region (5); wherein said first system die (6) is interposed between said first and second monitoring dies (16) along a direction of propagation of said acoustic detection waves within the coating region (5).

9. The system according to any of preceding claims, wherein said transducer device (15) comprises a matrix (20) of PMUT transducer elements (30), configured for emitting and/or receiving ultrasound waves, and a corresponding ASIC circuit (22), coupled to the matrix (20) and integrated in said first monitoring die (16), having the function of driving and/or processing of the signals detected by said PMUT transducer elements (30).

10. The system according to claim 9, wherein said matrix (20) and said ASIC circuit (22) are coupled on opposite sides of a common substrate (24), having connection elements (28) at a bottom for the electrical coupling to the support base (4) of the package (2) of the integrated system (1).

11. The system according to any of preceding claims, further comprising an interface region (40) interposed between a top surface (16a) of said first monitoring die (16), opposite to a bottom surface coupled to said support base (4), and said coating region (5); said interface region (40) having an acoustic impedance matching function.

12. The system according to claim 11, wherein a thickness of said interface region (40) is sized at 1/4 of a wavelength of said acoustic detection waves and a corresponding characteristic impedance, Z₃, is calculated as: ${Z}_{3} = \sqrt{{Z}_{1} ⋅ {Z}_{2}}$, where Z₁ is a characteristic impedance of said coating region (5) and Z₂ is a characteristic impedance associated with said transducer device (15).

13. A method for monitoring the onset of defects for an integrated electronic system (1) provided with a package (2) formed by a support base (4) and by a coating region (5) arranged on the support base (4) and comprising at least one first system die (6), including semiconductor material, coupled to the support base (4) and arranged in the coating region (5),
further comprising determining the onset of defects within the coating region (5), through the emission by at least one transducer device (15) of acoustic detection waves and the acquisition of corresponding received acoustic waves, whose characteristics are affected by, and therefore are indicative of, the aforementioned defects
said at least one transducer device (15) being formed in a first monitoring die (16), coupled to the support base (4) within the coating region (5) in which the first system die (6) is also arranged, said transducer device (15) being a micromachined ultrasound transducer, MUT.

14. The method according to claim 13, wherein said monitoring is performed in real time.

15. The method according to claim 13 or 14, wherein said defects comprise a delamination with partial or total detachment from said coating region (5) of a top surface (6a) and/or of a bottom surface of said first system die (6), said bottom surface being coupled to the support base (4).

## Patentansprüche

1. Integriertes elektronisches System (1), das mit einem Gehäuse (2) versehen ist, das durch eine Trägerbasis (4) und durch einen auf der Trägerbasis (4) angeordneten Beschichtungsbereich (5) ausgebildet ist und mindestens einen ersten System-Chip (6) umfasst, der ein Halbleitermaterial einschließt, mit der Trägerbasis (4) gekoppelt und in dem Beschichtungsbereich (5) angeordnet ist,
ferner umfassend, innerhalb des Gehäuses (2), ein Überwachungssystem (14), das so konfiguriert ist, dass es das Auftreten von Defekten innerhalb des Beschichtungsbereichs (5) durch die Emission akustischer Detektionswellen und die Erfassung entsprechender empfangener akustischer Wellen bestimmt, deren Merkmale von den vorgenannten Defekten beeinflusst werden und daher auf diese hinweisen,
wobei das Überwachungssystem (14) mindestens eine in einem ersten Überwachungs-Chip (16) ausgebildete Wandlervorrichtung (15) umfasst, die mit der Trägerbasis (4) innerhalb des Beschichtungsbereichs (5) gekoppelt ist, in dem auch der erste System-Chip (6) angeordnet ist, wobei die Wandlervorrichtung (15) ein mikrobearbeiteter Ultraschallwandler, MUT, ist.

2. System nach Anspruch 1, wobei das Überwachungssystem so konfiguriert ist, dass es das Auftreten einer Delaminierung mit teilweiser oder vollständiger Ablösung einer oberen Oberfläche (6a) und/oder einer unteren Oberfläche des ersten System-Chips (6) von dem Beschichtungsbereich (5) bestimmt, wobei die untere Oberfläche mit der Trägerbasis (4) gekoppelt ist.

3. System nach Anspruch 1 oder 2, wobei die Wandlervorrichtung (15) so konfiguriert ist, dass sie akustische Wellen emittiert und/oder empfängt.

4. System nach einem der vorhergehenden Ansprüche, wobei die Wandlervorrichtung (15) ein piezoelektrischer Wandler, PMUT (Piezoelectric Micromachined Ultrasound Transducer), ist.

5. System nach einem der Ansprüche 1 bis 3, wobei die Wandlervorrichtung (15) ein kapazitiver Wandler, CMUT (Capacitive Micromachined Ultrasound Transducer), ist.

6. System nach einem der vorhergehenden Ansprüche, wobei die Wandlervorrichtung (15) so konfiguriert ist, dass sie Ultraschallwellen emittiert, die sich innerhalb des Beschichtungsbereichs (5) in einer auf diesen beschränkten Weise ausbreiten, um den System-Chip (6) zu erreichen; und das Überwachungssystem (14) so konfiguriert ist, dass es Signale verarbeitet, die als Funktion empfangener Ultraschallwellen detektiert werden, deren Merkmale durch das Vorhandensein der Defekte beeinflusst werden, um das Vorhandensein der Defekte in Echtzeit zu detektieren.

7. System nach Anspruch 6, wobei sich bei Vorhandensein der Defekte Merkmale hinsichtlich der Amplitude und/oder eines entsprechenden zeitlichen Trends der detektierten Signale im Hinblick auf den Fall des Fehlens von Defekten unterscheiden.

8. System nach einem der vorhergehenden Ansprüche, umfassend mindestens eine weitere Wandlervorrichtung (18), die so ausgelegt ist, dass sie als Empfänger akustischer Detektionswellen fungiert, und die in einem zweiten Überwachungs-Chip (16) ausgebildet ist, der mit der Trägerbasis (4) innerhalb des Beschichtungsbereichs (5) gekoppelt ist; wobei der erste System-Chip (6) zwischen dem ersten und dem zweiten Überwachungs-Chip (16) entlang einer Ausbreitungsrichtung der akustischen Detektionswellen innerhalb des Beschichtungsbereichs (5) eingefügt ist.

9. System nach einem der vorhergehenden Ansprüche, wobei die Wandlervorrichtung (15) eine Matrix (20) aus PMUT-Wandlerelementen (30), die so konfiguriert sind, dass sie Ultraschallwellen emittieren und/oder empfangen, und eine entsprechende ASIC-Schaltung (22) umfasst, die mit der Matrix (20) gekoppelt und in den ersten Überwachungs-Chip (16) integriert ist, der die Funktion aufweist, die von den PMUT-Wandlerelementen (30) detektierten Signale anzusteuern und/oder zu verarbeiten.

10. System nach Anspruch 9, wobei die Matrix (20) und die ASIC-Schaltung (22) auf gegenüberliegenden Seiten eines gemeinsamen Substrats (24) gekoppelt sind, an dessen Unterseite Verbindungselemente (28) für die elektrische Kopplung mit der Trägerbasis (4) des Gehäuses (2) des integrierten Systems (1) vorhanden sind.

11. System nach einem der vorhergehenden Ansprüche, ferner umfassend einen Schnittstellenbereich (40), der zwischen einer oberen Oberfläche (16a) des ersten Überwachungs-Chips (16), gegenüber einer mit der Tägerbasis (4) gekoppelten unteren Oberfläche, und dem Beschichtungsbereich (5) eingefügt ist; wobei der Schnittstellenbereich (40) eine akustische Impedanzabgleichsfunktion aufweist.

12. System nach Anspruch 11, wobei eine Dicke des Schnittstellenbereichs (40) auf 1/4 einer Wellenlänge der akustischen Detektionswellen bemessen ist und eine entsprechende charakteristische Impedanz, Z₃, wie folgt berechnet wird: ${Z}_{3} = \sqrt{{Z}_{1} ⋅ {Z}_{2}}$, wobei Z₁ eine charakteristische Impedanz des Beschichtungsbereichs (5) ist und Z₂ eine charakteristische Impedanz ist, die der Wandlervorrichtung (15) zugeordnet ist.

13. Verfahren zum Überwachen des Auftretens von Defekten für ein integriertes elektronisches System (1), das mit einem Gehäuse (2) versehen ist, das durch eine Trägerbasis (4) und durch einen auf der Trägerbasis (4) angeordneten Beschichtungsbereich (5) ausgebildet ist und mindestens einen ersten System-Chip (6) umfasst, der ein Halbleitermaterial einschließt, mit der Trägerbasis (4) gekoppelt und in dem Beschichtungsbereich (5) angeordnet ist,
ferner umfassend das Bestimmen des Auftretens von Defekten innerhalb des Beschichtungsbereichs (5) durch die Emission von akustischen Detektionswellen von mindestens einer Wandlervorrichtung (15) und das Erfassen entsprechender empfangener akustischer Wellen, deren Merkmale von den vorgenannten Defektenn beeinflusst werden und daher auf diese hinweisen,
wobei die mindestens eine Wandlervorrichtung (15) in einem ersten Überwachungs-Chip (16) ausgebildet und mit der Trägerbasis (4) innerhalb des Beschichtungsbereichs (5) gekoppelt ist, in dem auch der erste System-Chip (6) angeordnet ist, wobei die Wandlervorrichtung (15) ein mikrobearbeiteter Ultraschallwandler, MUT, ist.

14. Verfahren nach Anspruch 13, wobei das Überwachen in Echtzeit durchgeführt wird.

15. Verfahren nach Anspruch 13 oder 14, wobei die Defekte eine Delaminierung mit teilweiser oder vollständiger Ablösung von dem Beschichtungsbereich (5) einer oberen Oberfläche (6a) und/oder einer unteren Oberfläche des ersten System-Chips (6) umfassen, wobei die untere Oberfläche mit der Trägerbasis (4) gekoppelt ist.

## Revendications

1. Système électronique intégré (1) pourvu d'un boîtier (2) formé par une embase (4) et par une région de revêtement (5) placée sur l'embase (4) et comprenant au moins une première puce de système (6), comprenant un matériau semiconducteur, couplée à l'embase (4) et disposée dans la région de revêtement (5), comprenant en outre, dans le boîtier (2), un système de surveillance (14) configuré pour déterminer l'apparition de défauts dans la région de revêtement (5), par l'émission d'ondes de détection acoustiques et l'acquisition d'ondes acoustiques reçues correspondantes, dont les caractéristiques sont affectées par, et sont donc représentatives, des défauts susmentionnés,
dans lequel ledit système de surveillance (14) comprend au moins un dispositif transducteur (15) formé dans une première puce de surveillance (16), couplée à l'embase (4) dans la région de revêtement (5) dans laquelle est aussi placée la première puce de système (6), ledit dispositif transducteur (15) étant un transducteur ultrasonore micro-usiné, ou MUT.

2. Système selon la revendication 1, dans lequel ledit système de surveillance est configuré pour déterminer l'apparition d'un délaminage avec séparation partielle ou totale, par rapport à ladite région de revêtement (5), d'une surface supérieure (6a) et/ou d'une surface inférieure de ladite première puce de système (6), la surface inférieure étant accouplée à l'embase (4).

3. Système selon la revendication 1 ou 2, dans lequel ledit dispositif transducteur (15) est configuré pour émettre et/ou recevoir lesdites ondes acoustiques.

4. Système selon l'une quelconque des revendications précédentes, dans lequel ledit dispositif transducteur (15) est un transducteur piézoélectrique, transducteur ultrasonore micro-usiné piézoélectrique, PMUT.

5. Système selon l'une quelconque des revendications 1 à 3, dans lequel ledit dispositif transducteur (15) est un transducteur capacitif, transducteur ultrasonore micro-usiné capacitif, CMUT.

6. Système selon l'une quelconque des revendications précédentes, dans lequel ledit dispositif transducteur (15) est configuré pour émettre des ondes ultrasonores qui se propagent dans la région de revêtement (5), de manière confinée dans cette dernière, afin d'atteindre ladite puce de système (6) ; et ledit système de surveillance (14) est configuré pour traiter des signaux détectés en fonction d'ondes ultrasonores reçues, dont les caractéristiques sont affectées par la présence desdits défauts, afin de détecter la présence desdits défauts en temps réel.

7. Système selon la revendication 6, dans lequel, en présence desdits défauts, les caractéristiques concernant l'amplitude et/ou une tendance temporelle correspondante des signaux détectés sont différentes par rapport au cas de l'absence de défaut.

8. Système selon l'une quelconque des revendications précédentes, comprenant au moins un autre dispositif transducteur (18) conçu pour fonctionner en tant que récepteur d'ondes de détection acoustiques, formé dans une deuxième puce de surveillance (16), couplée à l'embase (4) dans la région de revêtement (5) ; dans lequel ladite première puce de système (6) est intercalée entre lesdites première et deuxième puces de surveillance (16) le long d'une direction de propagation desdites ondes de détection acoustiques dans la région de revêtement (5).

9. Système selon l'une quelconque des revendications précédentes, dans lequel ledit dispositif transducteur (15) comprend une matrice (20) d'éléments transducteurs PMUT (30), configurée pour émettre et/ou recevoir des ondes ultrasonores, et un circuit ASIC correspondant (22), couplé à la matrice (20) et intégré à ladite première puce de surveillance (16), ayant pour fonction de piloter et/ou traiter les signaux détectés par lesdits éléments transducteurs PMUT (30).

10. Système selon la revendication 9, dans lequel ladite matrice (20) et ledit circuit ASIC (22) sont couplés sur des côtés opposés d'un substrat commun (24), comportant des éléments de connexion (28) sur une partie inférieure pour le couplage électrique avec l'embase (4) du boîtier (2) du système intégré (1).

11. Système selon l'une quelconque des revendications précédentes, comprenant en outre une région d'interface (40) intercalée entre une surface supérieure (16a) de ladite première puce de surveillance (16), à l'opposé d'une surface inférieure couplée à ladite embase (4), et ladite région de revêtement (5) ; ladite région d'interface (40) ayant une fonction d'accord de l'impédance acoustique.

12. Système selon la revendication 11, dans lequel une épaisseur de ladite région d'interface (40) est dimensionnée pour être égale à 1/4 d'une longueur d'onde desdites ondes de détection acoustiques et une impédance caractéristique correspondante, Z₃, est calculée d'après la formule suivante : ${Z}_{3} = \sqrt{{Z}_{1} ⋅ {Z}_{2}}$, où Z₁ est une impédance caractéristique de ladite région de revêtement (5) et Z₂ est une impédance caractéristique associée audit dispositif transducteur (15).

13. Procédé de surveillance de l'apparition de défauts pour un système électronique intégré (1) pourvu d'un boîtier (2) formé par une embase (4) et par une région de revêtement (5) placée sur l'embase (4) et comprenant au moins une première puce de système (6), comprenant un matériau semiconducteur, couplée à l'embase (4) et disposée dans la région de revêtement (5),
comprenant en outre le fait de déterminer l'apparition de défauts dans la région de revêtement (5), par l'émission par au moins un dispositif transducteur (15) d'ondes de détection acoustiques et l'acquisition d'ondes acoustiques reçues correspondantes, dont les caractéristiques sont affectées par, et sont donc représentatives, des défauts susmentionnés,
ledit au moins un dispositif transducteur (15) étant formé dans une première puce de surveillance (16), couplée à l'embase (4) dans la région de revêtement (5) dans laquelle est aussi placée la première puce de système (6), ledit dispositif transducteur (15) étant un transducteur ultrasonore micro-usiné, ou MUT.

14. Procédé selon la revendication 13, dans lequel ladite surveillance est effectuée en temps réel.

15. Procédé selon la revendication 13 ou 14, dans lequel lesdits défauts comprennent un délaminage avec séparation partielle ou totale, par rapport à ladite région de revêtement (5), d'une surface supérieure (6a) et/ou d'une surface inférieure de ladite première puce de système (6), ladite surface inférieure étant accouplée à l'embase (4).
